# EUROPÄISCHE PATENTANMELDUNG

(11) **EP 4 790 628 A1**
(43) Veröffentlichungstag der Anmeldung: **12.08.2026**
(21) Anmeldenummer: 25157139.4
(22) Anmeldetag: 11.02.2025
(51) Int. Cl.: G06Q 30/0242, G06Q 30/0272, H04W 4/02

(54) **ERFOLGSERMITTLUNG EINER AUSSENWERBUNG MITTELS EINES MOBILFUNKNETZES**

(71) Anmelder: Deutsche Telekom AG, 53113 Bonn (DE)
(72) Erfinder: MINOW, Jascha, 64625 Bensheim (DE); EL MALLOUKI, Said, 56329 St.Goar (DE); JAHN, Carl, 65191 Wiesbaden (DE)
(74) Vertreter: RDL Patentanwälte PartG mbB

(57) **Zusammenfassung**

Verfahren zum Ermitteln eines Erfolgs einer Außenwerbung, bei dem ein Knoten eines Mobilfunknetzes eine Position eines mit einer Basisstation des Mobilfunknetzes drahtlos verbundenen mobilen Endgeräts ermittelt und das mobile Endgerät während einer Messdauer in einer definierten Umgebung einer Au-ßenwerbung angeordnet wird, Knoten für ein Mobilfunknetz und Computerprogrammprodukt.

## Beschreibung

Die Erfindung betrifft ein Verfahren zum Ermitteln eines Erfolgs einer Außenwerbung, bei dem ein Knoten eines Mobilfunknetzes eine Position eines mit einer Basisstation des Mobilfunknetzes drahtlos verbundenen mobilen Endgeräts ermittelt und das mobile Endgerät während einer Messdauer in einer definierten Umgebung einer Außenwerbung angeordnet wird. Ferner betrifft die Erfindung einen Knoten für ein Mobilfunknetz und ein Computerprogrammprodukt.

Zu Außenwerbungen im Sinne der Erfindung gehören beispielsweise Litfaßsäulen, Plakatwände und digitale Anzeigeschirme, die in einem öffentlichen Raum angeordnet sind und von einer Mehrzahl von Personen visuell wahrgenommen werden bzw. werden können. In der Regel bewirbt eine Außenwerbung konkret ein Produkt, zu dessen Kauf eine die Außenwerbung visuell wahrnehmende Person veranlasst werden soll.

Das Produkt soll hier allerdings nicht einschränkend verstanden werden. Im Sinne der Erfindung ist vielmehr jeder visuell darstellbare Inhalt, der die Person zu einer Reaktion veranlasst, ein Produkt. Eine Außenwerbung hat demnach dann Erfolg, wenn die Person in einer gewünschten Weise auf die Außenwerbung reagiert.

Jede Werbung ist für einen Werbetreibenden mit Kosten verbunden. Daher ist der Werbetreibende interessiert zu erfahren, ob mit der Werbung eine die Kosten rechtfertigende Wirkung erzielt wird. Jedoch bietet eine Außenwerbung intrinsisch keine ausreichenden Möglichkeiten, einen Erfolg der Außenwerbung zu ermitteln.

Es ist eine Aufgabe der Erfindung, ein Verfahren zum Ermitteln eines Erfolgs einer Außenwerbung vorzuschlagen, das den Erfolg der Außenwerbung auf einfache Weise automatisch und zuverlässig präzise ermittelt. Weitere Aufgaben der Erfindung sind ein Knoten für ein Mobilfunknetz und ein Computerprogrammprodukt.

Ein Gegenstand der Erfindung ist ein Verfahren zum Ermitteln eines Erfolgs einer Außenwerbung, bei dem ein Knoten eines Mobilfunknetzes eine Position eines mit einer Basisstation des Mobilfunknetzes drahtlos verbundenen mobilen Endgeräts ermittelt und das mobile Endgerät während einer Messdauer in einer definierten Umgebung einer Außenwerbung angeordnet wird. Der Kern der Erfindung besteht darin, das Mobilfunknetz zum Ermitteln des Erfolgs zu nutzen. Auf diese Weise ist das Ermitteln des Erfolgs einfach möglich. Zum einen ist das Mobilfunknetz vorhanden und weit verbreitet. Zum anderen braucht die Außenwerbung selbst nicht modifiziert zu werden.

Die Messdauer entspricht beispielsweise einem Buchungszeitraum einer Litfaßsäule, einer Plakatwand oder eines digitalen Anzeigeschirms. Smartphones, Tablets und Notebooks sind mobile Endgeräte im Sinne der Erfindung. Die Auflistung ist allerdings nicht abschließend und nicht einschränkend. Jedes elektronische Gerät, das sich drahtlos mit einer Basisstation eines Mobilfunknetzes verbindet, kann als das mobile Endgerät in dem erfindungsgemäßen Verfahren mitwirken.

Die Erfindung beruht auf der praktisch immer zutreffenden Voraussetzung, dass jedes in der Umgebung der Außenwerbung angeordnete mobile Endgerät impliziert, dass eine und zwar stets dieselbe das mobile Endgerät bei sich tragende Person ebenfalls in der Umgebung der Außenwerbung angeordnet ist und die Außenwerbung visuell wahrnehmen kann und in der Regel auch visuell wahrnimmt.

Erfindungsgemäß ermittelt der Knoten eine Position der Außenwerbung, misst der Knoten eine Verweildauer, während derer das mobile Endgerät durchgehend in der definierten Umgebung angeordnet ist, ordnet der Knoten einem Nutzer des mobilen Endgeräts eine von Null verschiedene der Außenwerbung zugeordnete individuelle Adressatenkennzahl zu, wenn die gemessene Verweildauer länger ist als eine vordefinierte Mindestwirkdauer, und ermittelt der Knoten eine von der zugeordneten individuellen Adressatenkennzahl abhängige zu einem Erfolg der Außenwerbung korrespondierende Werbeerfolgskennzahl. Der Knoten des Mobilfunknetzes kann zu einem Kern, d.h. Core, des Mobilfunknetzes gehören und einen dedizierten Dienst, d.h. Service, des Mobilfunknetzes bereitstellen. Der dedizierte Dienst kann als Werbeerfolgskontrolldienst, d.h. Ad Efficiency Tracking Service, bezeichnet werden, wird von einem Betreiber des Mobilfunknetzes betrieben und kann von Werbetreibenden insbesondere kostenpflichtig genutzt werden.

Die Adressatenkennzahl ist eine dem Nutzer des mobilen Endgeräts und der Außenwerbung zugeordnete Kennzahl. Entsprechend können dem Nutzer eine Mehrzahl von Adressatenkennzahlen zugeordnet werden, wenn das mobile Endgerät in jeweiligen definierten Umgebungen mehrerer Außenwerbungen angeordnet ist. Der Betreiber des Mobilfunknetzes betreibt eine Profildatenbank mit Nutzerprofilen von Nutzern des Mobilfunknetzes und kann den Nutzer des mobilen Endgeräts mittels des zugeordneten Nutzerprofils identifizieren.

Die Verweildauer ist mit einer Wirkdauer der Außenwerbung korreliert. Wenn das mobile Endgerät zumindest während der vordefinierten Mindestwirkdauer in der Umgebung angeordnet ist, kann von einer Wirkung der Außenwerbung auf den Nutzer des mobilen Endgeräts ausgegangen werden. Das Überschreiten der vordefinierten Mindestwirkdauer stellt bereits einen ersten Erfolg der Außenwerbung dar, da die vordefinierte Mindestwirkdauer sicherstellt, dass der Nutzer die Außenwerbung visuell wahrgenommen hat. Infolgedessen wird die Adressatenkennzahl mit einem von Null verschiedenen Wert initialisiert. Die Mindestwirkdauer kann als eine Zeitspanne im Bereich von 30 Sekunden bis 90 Sekunden vordefiniert sein. Verweildauern des Nutzers an einer Bushaltestelle oder an einer roten Verkehrsampel können die Mindestwirkdauer überschreiten.

Die Verweildauer kann als ein durchgehendes Zeitintervall oder als eine Mehrzahl von separaten Zeitintervallen gemessen werden. Das durchgehende Zeitintervall ist eine zusammenhängende Zeitspanne, beispielsweise während einer relativ langen Wartezeit des Nutzers, während derer das mobile Endgerät die Umgebung der Außenwerbung nicht verlässt.

Die Verweildauer kann alternativ oder zusätzlich auch als eine Mehrzahl von nicht zusammenhängenden Zeitspannen vordefiniert sein, beispielsweise eine Mehrzahl von relativ kurzen Durchfahrten durch die Umgebung der Außenwerbung. In diesem Fall kann ein wiederholtes kurzes visuelles Wahrnehmen der Außenwerbung, insbesondere sogar ein beiläufiges bzw. unbewusstes visuelles Wahrnehmen, eine Wirkung auf den Nutzer haben.

Idealerweise wird die zugeordnete individuelle Adressatenkennzahl je mehr erhöht, desto länger die gemessene Verweildauer ist. Auf diese Weise wird berücksichtigt, dass die Wirkung der Außenwerbung auf den Nutzer je stärker ist desto länger oder öfter er die Außenwerbung visuell wahrnimmt. Durch das Erhöhen nimmt die zugeordnete individuelle Adressatenkennzahl ausgehend von dem initialen von Null verschiedenen Wert zu.

Je größer die zugeordnete individuelle Adressatenkennzahl ist, desto erfolgreicher ist die Außenwerbung bezogen auf den Nutzer des mobilen Endgeräts.

Der Knoten kann die Umgebung als einen maximalen Abstand der Position des mobilen Endgeräts von einer ermittelten Position der Außenwerbung definieren. Der maximale Abstand kann zwischen 50 m und 100 m liegen und bevorzugt 70 m betragen. Aus solchen Entfernungen kann der Nutzer einen Inhalt der Außenwerbung in den meisten Fällen erkennen.

Der Knoten kann eine Position der Außenwerbung durch Abfragen eines korrespondierenden Eintrags einer Werbedatenbank ermitteln. Jeder Eintrag der Werbedatenbank umfasst zumindest die Position der Außenwerbung, eine Bezeichnung der Außenwerbung und eine Bezeichnung eines der Außenwerbung zugeordneten Werbetreibenden. Die Position der Außenwerbung kann in eine Adresse, beispielsweise einen Straßennamen und eine Hausnummer, konvertiert werden, an der die Außenwerbung angeordnet ist.

In einer Ausführungsform ermittelt der Knoten die Position des mobilen Endgeräts mittels Triangulierens, mittels eines Satellitensystems oder mittels Enhanced Observed Time Difference, EOTD. Die auf diese Weise fortlaufend ermittelte derzeitige Position des mobilen Endgeräts wird von dem Mobilfunkbetreiber üblicherweise fortlaufend in einem Home Location Directory, HLD, bzw. einem Visitor Location Directory, VLD, des Mobilfunknetzes aktualisiert. Auf diese Weise kann der Knoten die Position des mobilen Endgeräts mittels des HLD bzw. des VLD entnehmen. Die Position des mobilen Endgeräts kann in eine Adresse verwandelt werden, an der die Außenwerbung angeordnet ist.

Der Knoten kann ferner einen Werbekontaktdienst, d.h. Ad Alert Service, bereitstellen. Der Werbeereignisdienst vergleicht fortlaufend die Position des mobilen Endgeräts mit Positionen von Außenwerbungen und übermittelt jedes Übereinstimmen von jeweiligen Adressen, d.h. jeden Kontakt des mobilen Endgeräts mit der Außenwerbung, zu dem Werbeerfolgskontrolldienst. Der Werbeerfolgskontrolldienst misst jede Zeitspanne eines übermittelten Übereinstimmens der jeweiligen Adressen als die Verweildauer des mobilen Endgeräts in der Umgebung der Außenwerbung.

Die zugeordnete individuelle Adressatenkennzahl wird vorteilhaft erhöht, wenn der Knoten während eines an die vordefinierte Mindestwirkdauer anschließenden definierten Antwortzeitintervalls eine von dem mobilen Endgerät übermittelte zu dem von der Außenwerbung beworbenen Produkt korrespondierende Suchabfrage oder DNS-Abfrage erkennt. Der Mobilfunkbetreiber betreibt als Internet Service Provider in der Regel einen Domain Name Server, DNS, Recursor. Der DNS Recursor empfängt eine von dem mobilen Endgerät übermittelte DNS-Abfrage, wenn der Nutzer des mobilen Endgeräts eine Webadresse besucht, d.h. eine Hypertext Transfer Protocol, HTTP,-Anfrage zu einem Uniform Resource Locator, URL, übermittelt. Das URL kann einen zu der Außenwerbung korrespondierenden Suchbegriff umfassen und/oder einer mit der Außenwerbung korrespondierenden Produktwebseite zugeordnet sein.

Die DNS-Abfrage wird als ein aktives Interesse des Nutzers an dem von der Außenwerbung beworbenen Produkt gewertet und spricht für eine starke Wirkung der Außenwerbung auf den Nutzer, d.h. für einen deutlich über das bloße visuelle Wahrnehmen hinausgehenden Erfolg der Außenwerbung bezogen auf den Nutzer des mobilen Endgeräts.

Die Werbedatenbank kann zu der Außenwerbung korrespondierende URLs umfassen. Wenn sich die DNS-Abfrage eine in der Werbedatenbank gespeicherte zu der Außenwerbung korrespondierende URL umfasst, wird die DNS-Abfrage als eine Reaktion des Nutzers auf die Außenwerbung gewertet, wenn die DNS-Abfrage in einem zeitlichen Zusammenhang mit einem Verweilen in der Umgebung der Außenwerbung steht. Der zeitliche Zusammenhang wird durch das definierte Antwortzeitintervall berücksichtigt.

Günstigerweise wird die zugeordnete individuelle Adressatenkennzahl je mehr erhöht, desto kürzer ein gemessener zeitlicher Abstand der ermittelten Suchabfrage oder DNS-Abfrage von einem Erreichen der definierten Mindestwirkdauer ist. Je früher der Nutzer auf die Außenwerbung reagiert, desto stärker ist die Wirkung der Außenwerbung auf den Nutzer, desto größer ist der Erfolg der Außenwerbung bezogen auf den Nutzer des mobilen Endgeräts.

Die zugeordnete individuelle Adressatenkennzahl wird vorteilhaft erhöht, wenn der Knoten während eines an die definierte Mindestwirkdauer anschließenden definierten Antwortzeitintervalls eine Position des mobilen Endgeräts an einer Position einer zu dem von der Außenwerbung beworbenen Produkt korrespondierenden Verkaufsstelle ermittelt. Die Verkaufsstelle kann eine Filiale eines Einzelhändlers, eine Filiale eines Großhändlers, ein Fachgeschäft, eine Filiale eines Kaufhauses und dergleichen sein.

Die Werbedatenbank kann Adressen von zu der Außenwerbung korrespondierenden Verkaufsstellen umfassen. Der Werbekontaktdienst vergleicht fortlaufend die Position des mobilen Endgeräts mit Positionen von Außenwerbungen und übermittelt jedes Übereinstimmen von jeweiligen Adressen zu dem Werbeerfolgskontrolldienst.

Das Besuchen der Verkaufsstelle wird als ein aktives Interesse des Nutzers an dem von der Außenwerbung beworbenen Produkt gewertet und spricht für eine starke Wirkung der Außenwerbung auf den Nutzer, d.h. für einen deutlich über das bloße visuelle Wahrnehmen und ein bloßes Interesse hinausgehenden Erfolg der Außenwerbung bezogen auf den Nutzer des mobilen Endgeräts.

Bevorzugt wird die zugeordnete individuelle Adressatenkennzahl je mehr erhöht, desto spezifischer die zu der Außenwerbung korrespondierende Verkaufsstelle ist. Auf diese Weise wird ein Besuch eines zu dem beworbenen Produkt korrespondierenden Fachgeschäfts betreffend die Wirkung der Außenwerbung höher bewertet als ein Besuch eines Kaufhauses.

Die zugeordnete individuelle Adressatenkennzahl wird idealerweise erhöht, wenn der Knoten während eines an die definierte Mindestwirkdauer anschließenden definierten Antwortzeitintervalls einen Kauf des von der Außenwerbung beworbenen Produkts durch den Nutzer ermittelt. Der Nutzer kann das beworbene Produkt beispielsweise in einem Online-Shop kaufen. Der Knoten kann den Kauf in dem Online-Shop anhand des URL des Online-Shops erkennen. Die Werbedatenbank kann URLs von Online-Shops umfassen, die den Kauf des beworbenen Produkts ermöglichen.

Die zugeordnete individuelle Adressatenkennzahl kann je mehr erhöht werden, desto kürzer ein zeitlicher Abstand des Kaufs von einem Erreichen der definierten Mindestwirkdauer ist. Ein früherer Kauf des Produkts korrespondiert mit einer stärkeren Wirkung der Außenwerbung bezogen auf den Nutzer.

In einer Ausführungsform berechnet der Knoten einen Mittelwert von während der vordefinierten Messdauer zugeordneten und erhöhten individuellen Adressatenkennzahlen als die Werbeerfolgskennzahl. Der Mittelwert wird über eine Mehrzahl von verschiedenen mobilen Endgeräten berechnet, die während der vordefinierten Messdauer zumindest für die Mindestwirkdauer in der Umgebung der Außenwerbung angeordnet sind. Die Werbeerfolgskennzahl gibt den Erfolg der Außenwerbung über die gesamte Messdauer und alle Nutzer an, auf welche die Außenwerbung während der Messdauer gewirkt hat.

Ferner kann der Knoten in die Berechnung des Mittelwerts jedes mobile Endgerät mit einer zugeordneten individuellen Adressatenkennzahl Null einbeziehen, dessen gemessene Verweildauer in der definierten Umgebung während der Messdauer größer als Null und kürzer als die definierte Mindestwirkdauer ist. Auf diese Weise werden solche Nutzer berücksichtigt, die zwar während der Messdauer in der Umgebung der Außenwerbung angeordnet sind, auf welche aber die Außenwerbung nicht gewirkt hat.

In einer Weiterbildung stellt der Knoten Profildaten von Nutzern mit zugeordneten individuellen Adressatenkennzahlen anonymisiert bereit. Der Werbetreibende kann auf die bereitgestellten anonymisierten Profildaten zugreifen und die bereitgestellten anonymisierten Profildaten zum Steigern seines Umsatzes verwenden.

Es wird angemerkt, dass der Werbetreibende die anonymisierten Profildaten mit Verkaufsdaten von Verkaufsstellen vergleichen kann. Das Vergleichen kann räumliche und zeitliche Zusammenhänge von Verkäufen in den Verkaufsstellen mit der Außenwerbung ergeben, die auf einen Erfolg der Außenwerbung hinweisen, der von dem Knoten des Mobilfunknetzes nicht ohne Weiteres ermittelt wird.

Abgesehen davon kann der Knoten dem Werbetreibenden ein Verweilen eines Nutzers in der Umgebung der Außenwerbung in Echtzeit mitteilen. Daraufhin kann der Werbetreibende in der Außenwerbung einen Rabattcode einblenden, wenn die Außenwerbung auf einem digitalen Anzeigeschirm angezeigt wird. Wenn der Nutzer das beworbene Produkt in einem Online-Shop kauft, erhält er nach Eingabe des Rabattcodes einen Preisnachlass.

Noch ein Gegenstand der Erfindung ist ein Knoten für ein Mobilfunknetz. Der Knoten ist konfiguriert, in einem Kern eines Mobilfunknetzes angeordnet zu sein und betrieben zu werden.

Erfindungsgemäß ist der Knoten konfiguriert, als ein Knoten des Mobilfunknetzes an einem Verfahren nach einer Ausführungsform der Erfindung teilzunehmen. Mit anderen Worten stellt der Knoten einen Werbeerfolgskontrolldienst bereit und ist konfiguriert, an einem Verfahren nach einer Ausführungsform der Erfindung mitzuwirken.

Ein weiterer Gegenstand der Erfindung ist ein Computerprogrammprodukt, umfassend ein digitales Speichermedium mit einem Programmcode. Das digitale Speichermedium kann als ein Speicherchip (Random Access Memory, RAM), eine Festplatte (HD, SSD), eine CD (Compact Disk), eine DVD (Digital Versatile Disk), ein USB (Universal Serial Bus)-Stick, ein Cloud-Speicher und dergleichen ausgebildet sein.

Erfindungsgemäß veranlasst der Programmcode eine Rechenvorrichtung dazu, als ein Knoten eines Mobilfunknetzes an einem Verfahren nach einer Ausführungsform der Erfindung mitzuwirken, wenn es von einem Prozessor der Rechenvorrichtung ausgeführt wird. Das Computerprogrammprodukt implementiert das erfindungsgemäße Verfahren auf einem Knoten des Mobilfunknetzes. Mit dem Knoten wird das Mobilfunknetz um einen Dienst erweitert, der einen Erfolg einer Außenwerbung auf einfache Weise automatisch und zuverlässig präzise ermittelt.

Ein wesentlicher Vorteil des erfindungsgemäßen Verfahrens besteht darin, dass der Erfolg einer Außenwerbung auf einfache Weise automatisch und zuverlässig präzise ermittelt wird. Werbetreibende können dank dem erfindungsgemäßen Verfahren ein Buchen von Außenwerbungen hinsichtlich eines Werbeerfolgs optimieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

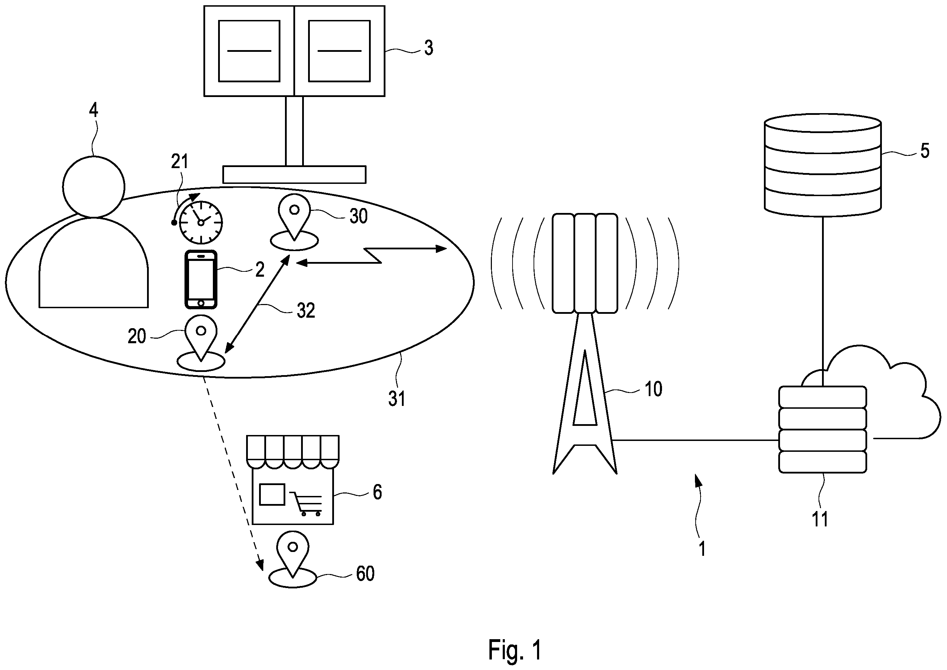

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Entitätendiagramm ein Mobilfunknetz mit einem Knoten nach einer Ausführungsform der Erfindung.

Fig. 1 zeigt in einem Entitätendiagramm ein Mobilfunknetz 1 mit einem Knoten 11 nach einer Ausführungsform der Erfindung. Ferner umfasst das Mobilfunknetz 1 eine Basisstation 10. Der Knoten 11 ist für das Mobilfunknetz 1 geeignet und konfiguriert, als ein Knoten 11 des Mobilfunknetzes 1 an einem Verfahren nach einer Ausführungsform der Erfindung teilzunehmen.

Der Knoten 11 kann mittels eines Computerprogrammprodukts implementiert sein, das ein digitales Speichermedium mit einem Programmcode umfasst. Der Programmcode veranlasst eine Rechenvorrichtung dazu, als der Knoten 11 des Mobilfunknetzes 1 an einem Verfahren nach einer Ausführungsform der Erfindung mitzuwirken, wenn es von einem Prozessor der Rechenvorrichtung ausgeführt wird.

Zum Ermitteln eines Erfolgs einer Außenwerbung 3 wird ein Verfahren nach einer Ausführungsform der Erfindung wie folgt ausgeführt.

Der Knoten 11 des Mobilfunknetzes 1 ermittelt eine Position 20 eines mit einer Basisstation 10 des Mobilfunknetzes 1 drahtlos verbundenen mobilen Endgeräts 2. Der Knoten 11 kann die Position 20 des mobilen Endgeräts 2 mittels Triangulierens, mittels eines Satellitensystems, oder mittels Enhanced Observed Time Difference, EOTD, ermitteln. Nicht einschränkende Beispiele für das Satellitensystem sind das russische Global Navigation Satellite System, GLON-ASS, das europäische Galileo, und das US-amerikanische Global Positioning System, GPS.

Das mobile Endgerät 2 wird während einer Messdauer in einer definierten Umgebung 31 einer ein Produkt bewerbenden Außenwerbung 3 angeordnet. Der Knoten 11 kann die Umgebung 31 als einen maximalen Abstand 32 der Position 20 des mobilen Endgeräts 2 von einer ermittelten Position 30 der Außenwerbung 3 definieren. Beispielsweise ermittelt der Knoten 11 eine Position 30 der Außenwerbung 3 durch Abfragen eines korrespondierenden Eintrags einer Werbedatenbank 5.

Der Knoten 11 misst während der Messdauer eine Verweildauer des mobilen Endgeräts 2 in der definierten Umgebung 31. Die Verweildauer kann als ein durchgehendes Zeitintervall oder als eine Mehrzahl von separaten Zeitintervallen gemessen werden.

Der Knoten 11 ordnet einem Nutzer 4 des mobilen Endgeräts 2 eine von Null verschiedene der Außenwerbung 3 zugeordnete individuelle Adressatenkennzahl zu, wenn die gemessene Verweildauer länger ist als eine vordefinierte Mindestwirkdauer. Die zugeordnete individuelle Adressatenkennzahl kann je mehr erhöht werden, desto länger die gemessene Verweildauer ist.

Ferner kann die zugeordnete individuelle Adressatenkennzahl erhöht werden, wenn der Knoten 11 während eines an die vordefinierte Mindestwirkdauer anschließenden definierten Antwortzeitintervalls eine von dem mobilen Endgerät 2 übermittelte zu dem von der Außenwerbung 3 beworbenen Produkt korrespondierende Suchabfrage oder DNS-Abfrage erkennt. Vorteilhaft wird die zugeordnete individuelle Adressatenkennzahl je mehr erhöht, desto kürzer ein gemessener zeitlicher Abstand der ermittelten Suchabfrage oder DNS-Abfrage von einem Erreichen der definierten Mindestwirkdauer ist.

Alternativ oder zusätzlich kann die zugeordnete individuelle Adressatenkennzahl erhöht werden, wenn der Knoten 11 während eines an die definierte Mindestwirkdauer anschließenden definierten Antwortzeitintervalls eine Position 20 des mobilen Endgeräts 2 an einer ermittelten Position 60 einer zu dem von der Außenwerbung 3 beworbenen Produkt korrespondierenden Verkaufsstelle 6 ermittelt. Günstigerweise wird die zugeordnete individuelle Adressatenkennzahl je mehr erhöht, desto spezifischer die zu der Außenwerbung 3 korrespondierende Verkaufsstelle 6 ist.

Alternativ oder zusätzlich kann die zugeordnete individuelle Adressatenkennzahl erhöht werden, wenn der Knoten 11 während eines an die definierte Mindestwirkdauer anschließenden definierten Antwortzeitintervalls einen Kauf des von der Außenwerbung 3 beworbenen Produkts durch den Nutzer 4 ermittelt. Idealerweise wird die zugeordnete individuelle Adressatenkennzahl je mehr erhöht, desto kürzer ein gemessener zeitlicher Abstand des ermittelten Kaufs von einem Erreichen der definierten Mindestwirkdauer ist.

Der Knoten 11 ermittelt eine von der zugeordneten individuellen Adressatenkennzahl abhängige zu einem Erfolg der Außenwerbung 3 korrespondierende Werbeerfolgskennzahl. Der Knoten 11 kann einen Mittelwert von während der vordefinierten Messdauer zugeordneten und/oder erhöhten individuellen Adressatenkennzahlen als die Werbeerfolgskennzahl berechnen. Vorteilhaft bezieht der Knoten 11 in die Berechnung des Mittelwerts jedes mobile Endgerät 2 mit einer zugeordneten individuellen Adressatenkennzahl Null ein, dessen gemessene Verweildauer in der definierten Umgebung 31 während der Messdauer größer als Null und kürzer als die definierte Mindestwirkdauer ist.

Der Knoten 11 kann weiterhin Profildaten von Nutzern 4 mit zugeordneten individuellen Adressatenkennzahlen anonymisiert bereitstellen.

### Bezugszeichenliste

- 1: Mobilfunknetz
- 10: Basisstation
- 11: Knoten
- 2: mobiles Endgerät
- 20: Position
- 21: Verweildauer
- 3: Außenwerbung
- 30: Position
- 31: Umgebung
- 32: Abstand
- 4: Nutzer
- 5: Werbedatenbank
- 6: Verkaufsstelle
- 60: Position

## Patentansprüche

1. Verfahren zum Ermitteln eines Erfolgs einer Außenwerbung (3), bei dem
- ein Knoten (11) eines Mobilfunknetzes (1) eine Position (20) eines mit einer Basisstation (10) des Mobilfunknetzes (1) drahtlos verbundenen mobilen Endgeräts (2) ermittelt;
- das mobile Endgerät (2) während einer Messdauer in einer definierten Umgebung (31) einer ein Produkt bewerbenden Außenwerbung (3) angeordnet wird;
- der Knoten (11) während der Messdauer eine Verweildauer des mobilen Endgeräts (2) in der definierten Umgebung (31) misst;
- der Knoten (11) einem Nutzer (4) des mobilen Endgeräts (2) eine von Null verschiedene der Außenwerbung (3) zugeordnete individuelle Adressatenkennzahl zuordnet, wenn die gemessene Verweildauer länger ist als eine vordefinierte Mindestwirkdauer; und
- der Knoten (11) eine von der zugeordneten individuellen Adressatenkennzahl abhängige zu einem Erfolg der Außenwerbung (3) korrespondierende Werbeerfolgskennzahl ermittelt.

2. Verfahren nach Anspruch 1, bei dem die Verweildauer als ein durchgehendes Zeitintervall oder als eine Mehrzahl von separaten Zeitintervallen gemessen wird.

3. Verfahren nach Anspruch 1 oder 2, bei dem die zugeordnete individuelle Adressatenkennzahl je mehr erhöht wird, desto länger die gemessene Verweildauer ist.

4. Verfahren nach einem der Ansprüche 1 bis 3, bei dem der Knoten (11) die Umgebung (31) als einen maximalen Abstand (32) der Position (20) des mobilen Endgeräts (2) von einer ermittelten Position (30) der Außenwerbung (2) definiert und/oder der Knoten (11) eine Position (30) der Außenwerbung (3) durch Abfragen eines korrespondierenden Eintrags einer Werbedatenbank (5) ermittelt.

5. Verfahren nach einem der Ansprüche 1 bis 4, bei dem der Knoten (11) die Position (20) des mobilen Endgeräts (2) mittels Triangulierens, mittels eines Satellitensystems oder mittels Enhanced Observed Time Difference, EOTD, ermittelt.

6. Verfahren nach einem der Ansprüche 1 bis 5, bei dem die zugeordnete individuelle Adressatenkennzahl erhöht wird, wenn der Knoten (11) während eines an die vordefinierte Mindestwirkdauer anschließenden definierten Antwortzeitintervalls eine von dem mobilen Endgerät (2) übermittelte zu dem von der Außenwerbung (3) beworbenen Produkt korrespondierende Suchabfrage oder DNS-Abfrage erkennt.

7. Verfahren nach Anspruch 6, bei dem die zugeordnete individuelle Adressatenkennzahl je mehr erhöht wird, desto kürzer ein gemessener zeitlicher Abstand der ermittelten Suchabfrage oder DNS-Abfrage von einem Erreichen der definierten Mindestwirkdauer ist.

8. Verfahren nach einem der Ansprüche 1 bis 7, bei dem die zugeordnete individuelle Adressatenkennzahl erhöht wird, wenn der Knoten (11) während eines an die definierte Mindestwirkdauer anschließenden definierten Antwortzeitintervalls eine Position (20) des mobilen Endgeräts (2) an einer ermittelten Position (60) einer zu dem von der Außenwerbung (3) beworbenen Produkt korrespondierenden Verkaufsstelle (6) ermittelt.

9. Verfahren nach Anspruch 8, bei dem die zugeordnete individuelle Adressatenkennzahl je mehr erhöht wird, desto spezifischer die zu der Außenwerbung (3) korrespondierende Verkaufsstelle (6) ist.

10. Verfahren nach einem der Ansprüche 1 bis 9, bei dem die zugeordnete individuelle Adressatenkennzahl erhöht wird, wenn der Knoten (11) während eines an die definierte Mindestwirkdauer anschließenden definierten Antwortzeitintervalls einen Kauf des von der Außenwerbung (3) beworbenen Produkts durch den Nutzer (4) ermittelt.

11. Verfahren nach Anspruch 10, bei dem die zugeordnete individuelle Adressatenkennzahl je mehr erhöht wird, desto kürzer ein gemessener zeitlicher Abstand des ermittelten Kaufs von einem Erreichen der definierten Mindestwirkdauer ist.

12. Verfahren nach einem der Ansprüche 1 bis 11, bei dem der Knoten (11) einen Mittelwert von während der vordefinierten Messdauer zugeordneten und/oder erhöhten individuellen Adressatenkennzahlen als die Werbeerfolgskennzahl berechnet.

13. Verfahren nach Anspruch 12, bei dem der Knoten (11) in die Berechnung des Mittelwerts jedes mobile Endgerät (2) mit einer zugeordneten individuellen Adressatenkennzahl Null einbezieht, dessen gemessene Verweildauer in der definierten Umgebung (31) während der Messdauer größer als Null und kürzer als die definierte Mindestwirkdauer ist.

14. Knoten (11) für ein Mobilfunknetz (1), der konfiguriert ist, als ein Knoten (11) des Mobilfunknetzes (1) an einem Verfahren nach einem der Ansprüche 1 bis 13 teilzunehmen.

15. Computerprogrammprodukt, umfassend ein digitales Speichermedium mit einem Programmcode, der eine Rechenvorrichtung dazu veranlasst, als ein Knoten (11) eines Mobilfunknetzes (1) an einem Verfahren nach einem der Ansprüche 1 bis 13 mitzuwirken, wenn es von einem Prozessor der Rechenvorrichtung ausgeführt wird.
